# EUROPÄISCHE PATENTSCHRIFT

(11) **EP 1 378 732 B1**
(45) Veröffentlichungstag und Bekanntmachung des Hinweises auf die Patenterteilung: **10.01.2018**
(21) Anmeldenummer: 03012856.5
(22) Anmeldetag: 06.06.2003
(51) Int. Cl.: G01G 19/04

(54) **Verfahren zum Erfassen von Radlasten von Schienenfahrzeugen und mobile Messeinrichtung**
Method for measuring the wheel loads of railroad cars and mobile measuring apparatus
Procédé de mesure de la charge des roues sur des véhicules ferroviaires et dispositif de mesure mobile

(30) Priorität: 02.07.2002 DE 10229512
(43) Veröffentlichungstag der Anmeldung: 07.01.2004
(73) Patentinhaber: Pieper, Siegfried, 55234 Eppelsheim (DE)
(72) Erfinder: Winkler, Reinhard, 14482 Postdam (DE); Bastian, Rainer, 14822 Borkheide (DE)
(74) Vertreter: Thews, Gustav

(56) Entgegenhaltungen:
- WO-A-01/18505
- FR-A- 2 091 580
- GB-A- 2 315 559
- US-A- 3 714 997
- US-A- 3 734 217

## Beschreibung

Die Erfindung betrifft eine Messeinrichtung zum Erfassen von Radlasten von Schienenfahrzeugen bestehend aus einem Lastaufnahmeblock, mit einem in diesem angeordneten Messabschnitt, wobei in dem Lastaufnahmeblock mindestens zwei kraftumleitende Elemente und mindestens zwei Stützmittel angeordnet sind, auf denen jeweils Endstücke von einem stabförmigen Messabschnitt lagern, wobei die Stützmittel streifen- und/oder punktförmige Auflagen zur Arretierung in einer Gleisanlage aufweisen. Die Erfindung betrifft ferner ein Verfahren zum Messen von statischen und/oder dynamischen Radlasten bzw. Radaufstandskräften von Schienenfahrzeugen.

Es ist bekannt, Radlasten bzw. Radaufstandskräfte von Schienenfahrzeugen zu erfassen. Diese Prüfarbeitsgänge sind nach genau festgelegten Kriterien in der Fahrzeuginstandhaltung durchzuführen und in 1a der Lebenslaufakte eines jeden Schienenfahrzeuges zu dokumentieren. Durch diese Prüfungen wird der Nachweis zulässiger Rad- und Achslastdifferenzen eines Schienenfahrzeuges zur Vermeidung von Entgleisungen und zur Verringerung von Schleuderneigungen erbracht.

Weiterhin ist bekannt, mit derartigen Prüfeinrichtungen das Gesamt- bzw. das Betriebsgewicht eines Schienenfahrzeuges zu ermitteln, um Überladungen, die zu einer Überbeanspruchung des Schienennetzes führen, zu vermeiden. Die bekannten Wäge- bzw. Messsysteme finden stationär und mobil Anwendung.

Aus der DE 32 10 410 A1 ist eine Vorrichtung und ein Verfahren zum Wiegen rollender Schienenfahrzeuge bekannt. Ein Wiegeabschnitt gemäß dieser Schrift besteht aus zwei nicht unterstützten Abschnitten von konventionellen Schienen, in dem zwei nebeneinander liegende Schwellen entfernt sind. An der so entstandenen Schienenbrücke werden an deren Unterseite vier Dehnungsmesser, bestehend aus zwei Paaren von äußeren und inneren Messgeräten, in den jeweiligen Brückenhälften montiert. Die Ausgangssignale der vier Dehnungsmesser werden summiert, indem die Ausgangssignale der inneren Messgeräte addiert und die der äußeren Messgeräte subtrahiert werden. Diese Summe stellt einen konstanten Wert dar, der repräsentativ ist für die vom Gleis aufgenommene Last, während sich die Achslast zwischen den beiden inneren Messgeräten bewegt. Ein von einem Rad jeder Achse betätigter Begrenzungsschalter aktiviert einen Computer. Der Computer zählt eine Mehrzahl von Summenmessungen zusammen, während eine Achse sich zwischen den beiden inneren Messgeräten bewegt, bildet Durchschnittswerte der Summenmessungen, um einen Durchschnittslastwert für jede Wagenachse zu produzieren und wandelt die zusammengezählten Durchschnittswerte in das Gewicht des Wagens um.

Aus DE 198 34 030 A1 ist eine Messschwelle für Gleisfahrzeuge, welche aus Biegestäben besteht, die parallel zu den Gleisen angeordnet sind, und über 50 Montageplatten die Auflagekraft der Schienen ermittelt, bekannt. Die Kraft der Schiene wird durch zwei Biegestäbe links und rechts der Schiene eines Schienenpaares ermittelt. Die Biegestäbe sind durch Quertraversen miteinander verbunden, wobei die Quertraversen sich auf den Schienen oder auf einer Platte für die Schienenbefestigung abstützen bzw. verbunden sind.

In der DE 100 31 092 A1 wird eine Wägevorrichtung für Schienenfahrzeuge beschrieben, die auf herkömmlichen standardisierten Betonschwellen befestigt ist. Die Betonschwellen tragen eine Kraftmessvorrichtung bzw. Wägezellen, auf denen wiederum die Schienen fest verbunden lagern. Die mit der Kraftmessvorrichtung bzw. den Wägezellen versehenen Betonschwellen sind in ein durch Schotterverklebung stabilisiertes Schotterbett eingeklebt. Mit der beschriebenen Wägevorrichtung ist sowohl das statische als auch das dynamische Gewicht von Schienenfahrzeugen oder -teilen ermittelbar.

Die beschriebenen Wäge- und Messvorrichtungen sind zwar demontierbar und insofern auch unter Umständen mobil einsetzbar, sind aber von ihrer Konstruktion und der Art und Weise ihrer Verbindung mit dem Schienenkörper für den stationären Betrieb gedacht und finden auch so ihre Anwendung.

In der WO 01/18505 A1 wird eine mobile Radlastmessvorrichtung beschrieben, bei der eine oder mehrere Wägezellen in einem kompakten, länglich trogförmigen, im Schnitt etwa u-förmigen und starren Metallkörper verschraubt ist. Jeweils zwei derartige Metallkörper werden mittels zweier Spannstreben in einem durch benachbarte Schwellen gebildeten Gleisfach an die Innenseiten der beiden Schienenstege gepresst, wobei die Spannstreben über Rohrstutzen an den Enden der Metallkörper starr angreifen. Durch fest verschraubte Rampen, die jeweils vor und nach der eigentlichen Messvorrichtung angeordnet sind, wird jeweils ein heranrollendes und zu messendes Rad von der Fahrfläche der Schiene abgehoben und ruht während der Messung mit dem Spurkranz auf der Messvorrichtung. Die Radlast bzw. die Radaufstandskräfte werden über den Spurkranz auf die Messvorrichtung mit innenliegendem Dehnungsmessstreifen übertragen.

Im Gegensatz zu stationären Radlastmessvorrichtungen, deren Aufbau meist mit erheblichen Investitionskosten verbunden ist, stellen mobile Einrichtungen eine wesentlich preisgünstigere Lösung dar. Sie lassen sich nach der Durchführung der Messungen wieder entfernen, so dass ein durch keinerlei Einbauten behinderter Fahrbetrieb gewährleistet ist. Für mobile Einrichtungen spricht auch, dass sie an beliebigen Gleisabschnitten mit einer bestimmten Schienenüberhöhung bzw. Gleiskrümmung eingesetzt werden können, sofern die Notwendigkeit einer Messung der Radlasten unter derartigen Bedingungen gefordert ist.

Als nachteilig hat sich bei der Radlastmessvorrichtung nach der WO 01/18505 A1 erwiesen, dass sich die Radlastmessvorrichtung während der Montage nicht mehr der aktuellen Einbausituation, die auf Grund von Fertigungstoleranzen im Gleisbau und im Herstellungsprozess der Schiene auftritt, anpassen kann. Dadurch kommt es zu Kipp- und Anhebeerscheinungen der Wägebrücken unter Last, was zu Messwertverfälschungen führt. Will man das durch Anwendung erhöhter Spannkraft vermeiden, treten Deformationen des Metallkörpers ein. Auch ist es von Nachteil, dass sich die Radlastmessvorrichtung in Folge ihrer Gestalt nur zwischen zwei benachbarten Gleisklammem anbringen lässt. Das ist aber in dem Fall hinderlich, wenn bei der Messung, beispielsweise an einem mehrachsigen Drehgestell, eine der Achsen über einer Schwelle mit Gleisklammem steht.

Die FR 2 091 580 A zeigt eine Verspannvorrichtung für Schienen.

Die GB 2 315 559 A sowie die WO 01/18505 A, die US 3,714,997 A und die US 3,734,217 A zeigen eine Messeinrichtung zum Erfassen von Radlasten von Schienenfahrzeugen bestehend aus einem Lastaufnahmeblock mit einem Messabschnitt, wobei in dem Lastaufnahmeblock mindestens zwei kraftumleitende Elemente und mindestens zwei Stützmittel angeordnet sind, auf denen jeweils Endstücke von einem stabförmigen Messabschnitt lagern, wobei die Stützmittel streifen- und/oder punktförmige Auflagen zur Arretierung in einer Gleisanlage aufweisen.

Der Erfindung liegt die Aufgabe zugrunde, eine Messeinrichtung und ein entsprechendes Messverfahren derart auszubilden, dass eine schnellere und einfachere Montage und Demontage unter gleichzeitiger Verbesserung der Messergebnisse gewährleistet ist.

Mit dem vorzuschlagenden Messverfahren und der mobilen Vorrichtung sind Verkantungen und Verspannungen der Wäge- bzw. Messzelle und damit einhergehende Messwertfehler, insbesondere in problematischen Einbausituationen, auszuschließen. Die vorzuschlagende Vorrichtung ist in allen Schienenprofilen und Spurweiten und bei geringfügig gekrümmten Gleisabschnitten und bei einer Schräglage des Gleisprofils einsetzbar, wobei die Messeinrichtung so gestaltet ist, dass sie auch dauerhaft im stationären Einbau einsetzbar ist.

Erfindungsgemäß wird die Aufgabe durch die in den Ansprüchen 1 und 22 genannten Merkmale gelöst. Vorteilhafte Ausgestaltungen sind in den Unteransprüchen angegeben.

Die erfindungsgemäße Messeinrichtung zum Erfassen von Radlasten von Schienenfahrzeugen kennzeichnet sich dadurch aus, dass die mindestens zwei Stützmittel von klauenförmiger Gestalt sind und dass als ein kraftumleitendes Element eine u-förmige Brücke angeordnet ist, die in x-Richtung, also horizontal längs zu einer Schiene, seitlich parallel zu dem Messabschnitt verläuft, wobei die Brücke die Stützmittel verbindet, und dass als weitere kraftumleitende Elemente in dem als Auflagefuß ausgebildeten Stützmittel oberhalb der Endstücke des stabförmigen Messabschnitts Verschlussstücke liegen.

Die Elemente zum Verspannen von zwei Lastaufnahmeblöcken bestehen aus einer einarmigen Verspannvorrichtung.

Die Lastaufnahmeblöcke sind jeweils als separate Messblöcke ausgebildet. In einem Messblock ist als ein kraftumleitendes Element eine u-förmige Brücke angeordnet, die in x-Richtung seitlich parallel zu einem Messabschnitt, vorzugsweise einer balken- bzw. stabförmigen Wägebrücke, verläuft und so angeordnet ist, dass die u-förmige Brücke Stützmittel verbindet, welche an Schienen anliegen. Die Brücke besteht aus einem in x-Richtung verlaufenden Schenkel, aus zwei äußeren Schenkeln mit je einem abgewinkelten Flansch, wobei die Flansche wiederum mit den Stützmitteln kraftübertragend verbunden sind. Als weiteres kraftumleitendes Element sind oberhalb und unterhalb der Brücke eine obere Versteifungsplatte und eine untere Versteifungsplatte angeordnet.

Die am Messblock befindlichen Stützmittel sind als Auflagefüße ausgebildet. Sie sind von klauenförmiger Gestalt mit einer inneren Wange und einer äußeren Wange, wobei die innere Wange des Auflagefußes mit der u-förmigen Brücke kraftschlüssig verbunden ist und die äußere Wange des Auflagefußes im montierten Zustand über Adapter an der Schiene anliegt. Zwischen der inneren Wange und der äußeren Wange der Stützmittel sind Endstücke der Wägebrücke um Führungszapfen bewegbar in schwimmender Ausführung angeordnet, so dass die Wägebrücke freihängend, nur auf ihren Endstücken lagernd, zwischen den Stützmitteln angeordnet ist, Oberhalb dieser Endstücke liegen Verschlussstücke als kraftumleitende Elemente auf.

Bei der Wägebrücke handelt es sich um ein wägetechnisches Element, welches bei Verformung in Folge einer äußeren Krafteinwirkung seine Ausgangsspannung proportional zur eingebrachten Kraft verändert. Die Messung von statischen und/oder dynamischen Radlasten bzw. Radaufstandskräften von Schienenfahrzeugen erfolgt gemäß der Erfindung auf einem stabförmigen bzw. balkenförmigen Lastenaufnehmer also freihängend. Während des Wäge- bzw. Messvorganges verbiegt sich die stabförmige bzw. balkenförmige Wägebrücke über ein speziell behandeltes Biegelager in z-Richtung nach unten. Die Messgrößen oder der Verformungsweg aus einer Radaufstandskraftmessung werden über Dehnungsmessstreifen, Drucksensoren, Distanzsensoren, optische Sensoren oder andere Messmittel erfasst und ausgewertet. Die linke und rechte Radaufstandskraft wird addiert und ergibt die Achsaufstandskraft.

Rampenplatten, Auffahrflächen, Distanzplatten und Verbindungsbrücken ermöglichen das Auffahren auf und über die Stützmittel und die stabförmige bzw. balkenförmige Wägebrücke. An der u-förmigen Brücke sind mittig Kupplungselemente zur Aufnahme einer einarmigen Verspannvorrichtung vorgesehen.

Es liegt im Bereich der Erfindung, die Messeinrichtung zu kombinieren, indem mindestens zwei Messeinrichtungen hintereinander in einem Gleisbett angeordnet und durch Verbindungsbrücken miteinander zu einer Mehrfachmesseinrichtung verbunden werden.

Das Verfahren zum Erfassen von Radlasten von Schienenfahrzeugen erfolgt unter Verwendung von mindestens zwei Lastaufnahmeblöcken, von Elementen zum Halten und Verspannen der Lastaufnahmeblöcke in einer Gleisanlage, unter Verwendung von Stützmitteln und zwischen den Stützmitteln angeordneten Messabschnitten nach folgenden Verfahrensschritten:
Verbinden mindestens zweier Lastaufnahmeblöcke mittels Elementen zum Halten und Verspannen, wobei die Lastaufnahmeblöcke je eine an ihren Endstücken gelagerte Wägebrücke in Stützmitteln aufnehmen;
Einsetzen und Verspannen mindestens zweier miteinander verbundener Lastaufnahmeblöcke in einer Gleisanlage, wobei die beim Verspannen auftretende Kraft von einer einarmigen Verspannvorrichtung auf deren Kugelzone in eine kugelzonenförmige Einstecköffnung auf eine u-förmige Brücke mit Schenkeln, äußeren Schenkeln und Flanschen auf Stützmittel und auf Schienen übertragen wird, wobei die Brücke die Stützmittel verbindet; Aufsetzen von Verschlussstücken als kraftumleitende Elemente in dem als Auflagefuß ausgebildeten Stützmittel oberhalb der Endstücke des stabförmigen Messabschnitts;
Aufsetzen von Lasttragelementen und/oder Auf- und Abfahrtschrägen auf die Verschlussstücke oder die Stützmittel und Messabschnitte, wobei die Lasttragelemente und/oder Auf- und Abfahrtschrägen aus Rampenplatten und/ oder Auffahrflächen und/oder Verbindungsbrücken bestehen,
Auffahren eines Fahrzeuges über die Rampenplatten auf die Auffahrfläche, Messen der Radlast mittels stabförmiger Wägebrücke, wobei diese eine Brücke bildend, frei hängend angeordnet und an ihren Endstücken in einem definierten Bereich von einem Führungszapfen arretiert, schwimmend gelagert wird, wobei die Wägebrücke sich während des Wäge- bzw. Messvorganges über ein Biegelager nach unten verbiegt und die Messgrößen oder der Verformungsweg über Dehnungsmessstreifen, Drucksensoren, Distanzsensoren, optische Sensoren und/oder andere Messmittel erfasst und ausgewertet werden.

Zum Messen mehrerer Achsen gleichzeitig, beispielsweise eines mehrachsigen Drehgestells, werden mehrere Messeinrichtungen hintereinander, beispielsweise in einer Wartungsgrube, gekoppelt und in einem Gleisbett zu einer Mehrfachmesseinrichtung angeordnet. Zwischen den einzelnen Messeinrichtungen sind Verbindungsbrücken aufgelegt, die ein unproblematisches Überfahren der Achsen über die einzelnen Messeinrichtungen gewährleisten.

Die Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen schutzfähige Ausführungen darstellen, für die hier Schutz beansprucht wird.

Zwei Ausführungsbeispiele der Erfindung sind in der Zeichnung dargestellt und werden im Folgenden näher erläutert. In der zugehörigen Zeichnung zeigen:
- Figur 1: Draufsicht mit Teilschnitten der Messeinrichtung im demontierten Zustand,
- Figur 2: Seitenansicht mit Teilschnitten der Messeinrichtung im montierten Zustand zwischen den Schienen,
- Figur 3: Draufsicht mit Teilschnitten auf einen Block einer Messeinrichtung mit entfernter oberer Versteifungsplatte,
- Figur 4: vereinfachter Schnitt A - A nach Fig. 1,
- Figur 5: Ansicht B - B nach Fig. 3 eines Blockes der Messeinrichtung,
- Figur 6: Schnitt C - C nach Fig. 3,
- Figur 7: Schnitt durch eine Verspannhülse,
- Figur 8: Draufsicht auf eine kombinierte Messvorrichtung für drei Achsen im montierten Zustand zwischen den Schienen,
- Figur 9: Schnitt D - D nach Fig. 8.

### Beispiel 1

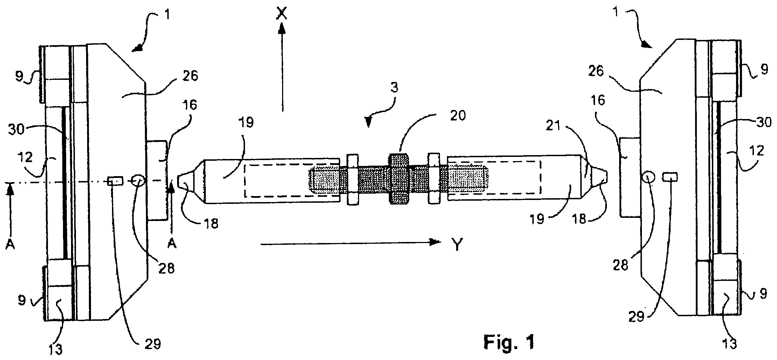

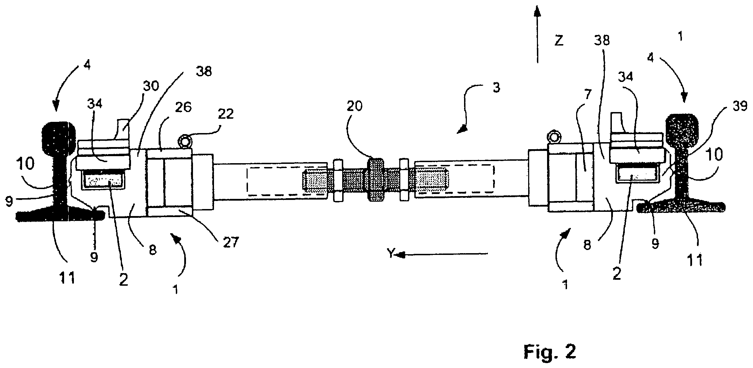

In Figur 1 ist eine Messeinrichtung in Draufsicht im demontierten Zustand dargestellt. Sie besteht aus einem linken und einem rechten Messblock **1** mit innenliegender Wägebrücke **2** (Figur 2) und einer einarmigen Verspannvorrichtung **3.** Zur Vorbereitung des Messvorganges werden die beiden Messblöcke **1** außerhalb des Gleisbettes mit der Verspannvorrichtung **3** vormontiert, danach zwischen die Schienen **4** verbracht und durch weiteres Spannen der Verspannvorrichtung **3** zwischen den Schienen **4** fest arretiert (Figur 2).

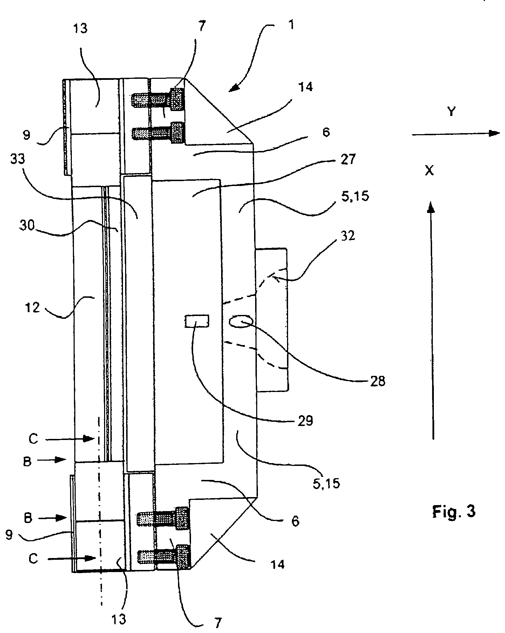

Der Messblock **1** besteht aus einer etwa u-förmigen Brücke **5** (Fig. 3), die in x-Richtung seitlich parallel zur Wägebrücke **2** angeordnet ist und zwei Auflagefüße **8** des Messblockes **1** verbindet. Die Brücke **5** besteht aus einem parallel zu den Schienen **4** verlaufenden Schenkel **15,** an dessen Enden sich anschließend und in y-Richtung etwa rechtwinklig abgebogen, jeweils ein äußerer Schenkel **6** angeordnet ist, an welchem sich wiederum etwa rechtwinklig abgebogen jeweils ein Flansch **7** sich anschließt, der die Verbindung zu je einem Auflagefuß **8** herstellt.

Wie aus der Fig. 2 ersichtlich, weist der Auflagefuß **8** eine etwa klauenförmige Gestalt mit einer inneren Wange **38** und einer äußeren Wange **39** auf, wobei in dem Freiraum zwischen den Wangen **38; 39** die Wägebrücke **2** mit ihren Endstücken lagert. Oberhalb des in dem Freiraum der Klaue angeordneten Endstückes der Wägebrücke **2** ist ein kraftumleitendes Verschlussstück **34** zwischen den Wangen **38; 39** eingelegt.

An dem Auflagefuß **8** sind mindestens zwei Auflageadapter **9** angeordnet, die eine Anpassung an die aktuelle Einbausituation am Schienensteg **10** und am Schienenfuß **11** gewährleisten. Eine solche Anpassung ist erforderlich, um herstellungsbedingte Unebenheiten an den Schienen **4** auszugleichen und um simulierte Extrembeanspruchungen zu messen. Alternativ können die Auflageadapter **9** mehrteilig oder punktförmig angeordnet werden.

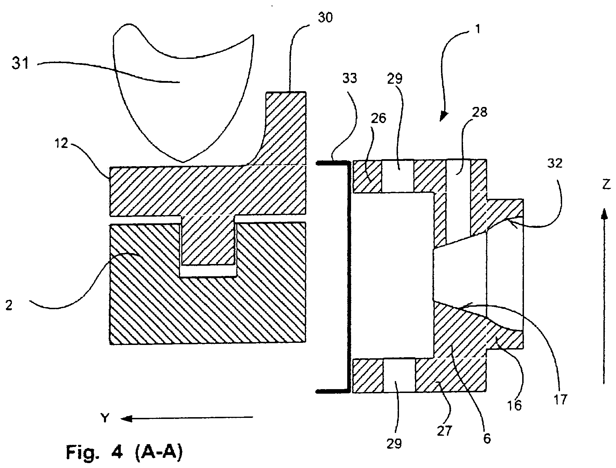

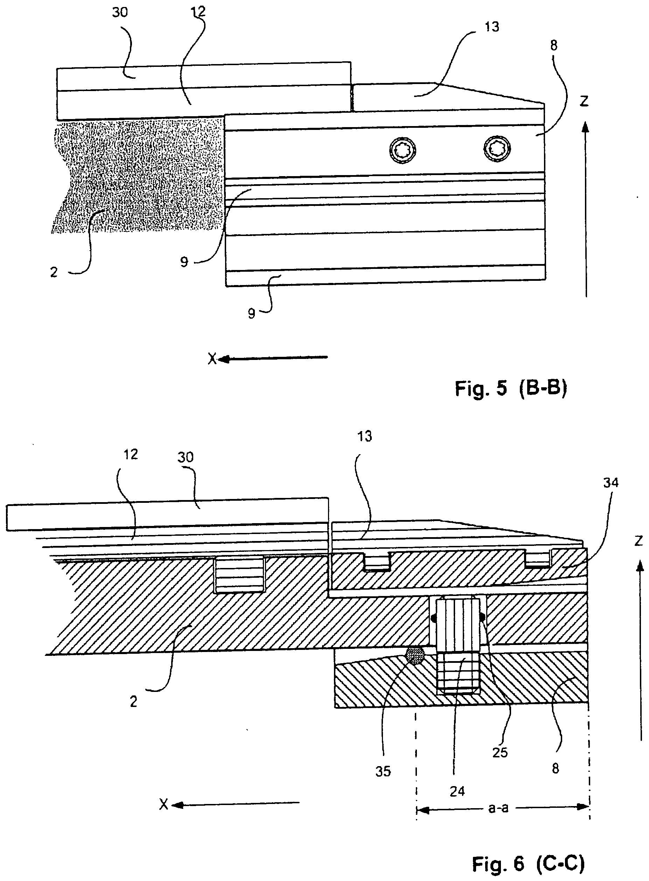

Der Messblock **1,** der wie ausgeführt zwei Auflagefüße **8** enthält, nimmt in x-Richtung, also horizontal längs zur Schiene **4,** zwischen den beiden Wangen **38; 39** der Auflagefüße **8,** die Endstücke der Wägebrücke **2** auf. Die Wägebrücke **2** ist in diesem Ausführungsbeispiel ein stabförmiger bzw. balkenförmiger Lastenaufnehmer, der zwischen zwei Stützmitteln, hier zwei Auflagefüße **8** mit Auflageadaptern **9,** eingehangen ist. Wie aus den Figuren 4 und 6 ersichtlich, ist die Wägebrücke **2** in schwimmender Ausführung angeordnet, in dem sie nicht fest verschraubt, sondern um Führungszapfen **24** mit Nullringen **25** beweglich gelagert ist. Die schwimmende Lagerung des stabförmigen bzw. balkenförmigen Lastenaufnehmers erfolgt über dem Bereich a - a (Fig. 6) zwischen den beiden Wangen **38; 39** der Auflagefüße **8**. Die Führungszapfen **24** in den Auflagefüßen **8** gestatten der Wägebrücke **2** ein präzises Erreichen der Nulllage im nicht belasteten Zustand.

Bei den Wägebrücken **2** handelt es sich um wägetechnische Elemente, welche bei Verformung in Folge einer äußeren Krafteinwirkung ihre Ausgangsspannung proportional zur eingebrachten Kraft verändern. Die Messung von statischen und/oder dynamischen Radlasten bzw. Radaufstandskräften von Schienenfahrzeugen erfolgt gemäß der Erfindung auf dem stabförmigen bzw. balkenförmigen Lastenaufnehmer also freihängend. Während des Wäge- bzw. Messvorganges verbiegt sich die stabförmige bzw. balkenförmige Wägebrücke **2** über ein speziell behandeltes Biegelager **35** in z-Richtung nach unten. Die Messgrößen oder der Verformungsweg aus einer Radaufstandsmessung werden über Dehnungsmessstreifen, Drucksensoren, Distanzsensoren, optische Sensoren oder andere Messmittel erfasst und ausgewertet. Die linke und rechte Radaufstandskraft werden addiert und ergeben die Achsaufstandskraft.

Oberhalb der Wägebrücke **2** ist eine Auffahrfläche **12** angeordnet. Längs auf der Auffahrfläche **12** befindet sich eine wulstförmige Aufbordung **30.** Diese dient der Stabilität der Auffahrfläche **12** und deren Kraftaufnahmevermögen sowie der exakten Führung des Spurkranzes **31** (Fig. 4). Unter die plattenförmige Auffahrfläche **12** oder auf diese werden für die unterschiedlichen Anwendungsbereiche der Messeinrichtung Distanzplatten gelegt, so dass ein auf die Auffahrfläche **12** mit dem Spurkranz **31** aufgefahrenes Rad eines Schienenfahrzeuges gegenüber der Fahrfläche der Schiene **4** größer beabstandet ist. Es kann somit dem Abnutzungsgrad der Lauffläche der Räder eines Schienenfahrzeuges und der damit einher gehenden Vergrößerung des Abstandes zwischen Lauffläche der Räder und Spurkranzkuppe entsprochen werden.

In x-Richtung sind der Auffahrfläche **12** je eine Rampenplatte **13** vor- bzw. nachgelagert. Diese sind auf dem Verschlussstück **34** des Auflagefußes **8** außerhalb des Messbereiches auswechselbar aufgesteckt. In x-Richtung verläuft eine Rampenplatte **13** schräg aufwärts zur Höhe der Auffahrfläche **12** und eine Rampenplatte **13** schräg von der Höhe der Auffahrfläche **12** abwärts. Die Rampenplatten **13** sind in Auf- und Abfahrtrichtung angefast. Auch auf oder unter die Rampenplatten **13** können je nach Bedarf Distanzplatten aufgelegt werden, um einen entsprechenden Höhenausgleich für das Auflegen von zusätzlichen Distanzplatten im Bereich der Auffahrfläche **12** zu erhalten.

Es liegt im Bereich der Erfindung, die Auffahrflächen **12** so zu gestalten, dass sie in der jeweiligen Auf- und Abfahrtrichtung angefast sind und somit die Rampenplatten **13** entfallen können. Zur Arretierung der Auffahrflächen **12** und der Rampenplatten **13** an ihren jeweiligen Unterlagen werden diese vorzugsweise an ihren Unterseiten mit entsprechend starken Zylinderstiften versehen, die wiederum zum Halten in zylindrischen Öffnungen der balkenförmigen Wägebrücke **2** bzw. in dem Verschlussstück **34** der Auflagefüße **8** eingreifen.

Zwischen der Brücke **5** und der unter der Auffahrfläche **12** angeordneten Wägebrücke **2** ist ein Kabelschutz **33** zur Aufnahme der Verbindungskabel der Wägebrücke **2** angeordnet. Die u-förmige Brücke **5** ist, wie aus den Fig. 1 und 3 ersichtlich, jeweils mit einer oberen Versteifungsplatte **26** und einer unteren Versteifungsplatte **27** abgedeckt, so dass die u-förmige Brücke **5** wie ein kompakter geschlossener Körper wirkt. Die Versteifungsplatten **26; 27** dienen dem Versteifen der Gesamtkonstruktion und verhindern Torsionen. Außerdem sind im Bereich der äußeren Schenkel **6** der u-förmigen Brücke **5** des Messblockes **1,** wie in der Fig. 3 zu sehen, Versteifungen **14** zur Verhinderung von Torsionen angeordnet. In der oberen und unteren Versteifungsplatte **26; 27** sind rechteckige Öffnungen **29** eingelassen, in welche bei der Demontage erforderlichenfalls Keile - in den Figuren nicht dargestellt - eingeschlagen werden, um die einarmige Verspannvorrichtung **3** am konischen Führungsstück **18** zu lösen.

Auf dem in x-Richtung verlaufenden Schenkel **15** der Brücke **5** ist mittig ein Aufnahmeelement **16** angeordnet, welches mit dem jeweiligen Kupplungsteil der einarmigen Verspannvorrichtung **3** im montierten Zustand korrespondiert. In diesem Aufnahmeelement **16** ist in y-Richtung zur Brücke **5** hin eine Aussparung von der Form einer Kugelzone als Einstecköffnung **32** vorgesehen, die wiederum nach innen in eine konische Vertiefung **17** übergeht, wobei diese mittig den Schenkel **15** der Brücke **5** durchbricht. In das Aufnahmeelement **16** mit der Einstecköffnung **32** und der sich anschließenden konischen Vertiefung **17** wird ein Kupplungsteil der Verspannvorrichtung **3** eingeführt. Die konische Vertiefung **17** dient im Wesentlichen der sicheren Einführung des Kupplungsteiles der Verspannvorrichtung **3,** während die Einstecköffnung **32** von der Form einer Kugelzone als abstützende und kraftübertragende Vorrichtung vorgesehen ist und durch ihre bombierte Ausführung in der Lage ist, etwaige Toleranzen bei der optimalen Anpassung an die aktuelle Einbausituation auszugleichen. Dementsprechend ist das konische Führungsstück **18** der Verspannvorrichtung **3** nicht passgerecht zur konischen Vertiefung **17** gefertigt.

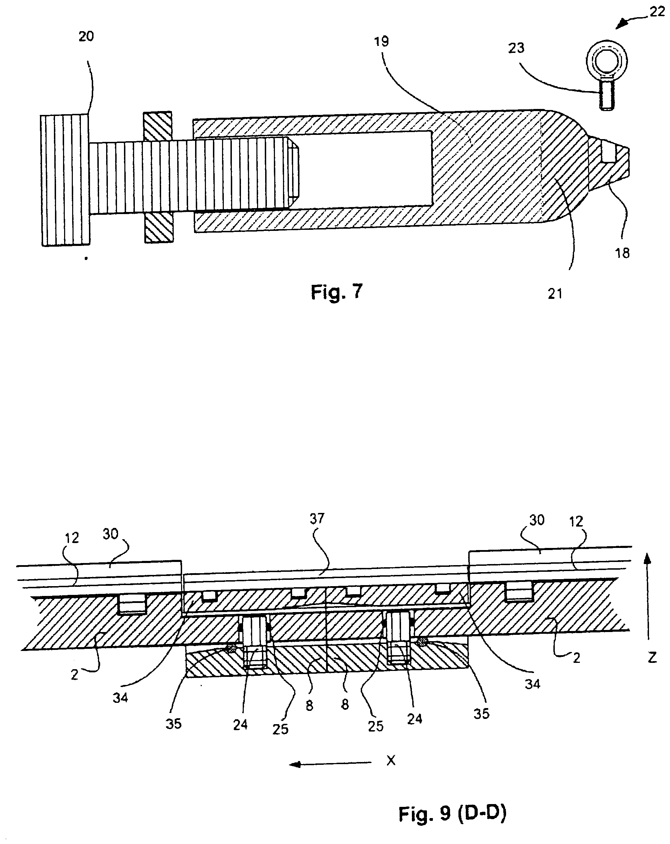

Wie in den Fig. 1, 2 und 7 dargestellt ist, bilden zwei Verspannhülsen **19,** die im Inneren ein gegenläufiges Gewinde aufweisen, in welches jeweils eine Schraubverspannung **20,** versehen mit Kontermuttern, eingeschraubt ist, eine einarmige Verspannvorrichtung **3.** Der Begriff einarmige Verspannvorrichtung **3** wurde hier zur Abgrenzung gegenüber dem Stand der Technik gewählt, weil, wie bereits ausgeführt, bekannte Messeinrichtungen mit zwei Elementen zum Verspannen (zweiarmig), zum Verklemmen und Verkanten der Messzellen führen. An den beiden den Schienen **4** zugewandten Enden gehen die beiden Verspannhülsen **19** in bombierte Verjüngungen in Form einer Kugelzone **21** über. Auf der Kugelzone **21** ist jeweils ein bereits erwähntes konisches Führungsstück **18** aufgesetzt, wobei das konische Führungsstück **18** mit einer Gewindebohrung (Fig. 7) versehen ist.

Während der Montage der Messeinrichtung, also der Verbindung der beiden Messblöcke **1** mit der einarmigen Verspannvorrichtung **3,** wird eine Verriegelung **22** mit einem Gewindezapfen **23** in das konische Führungsstück **18** eingeschraubt. Dies ist notwendig, um die Verspannvorrichtung **3** während der Montage an den Messblöcken **1** zu arretieren. Für diese Montagehilfe ist in z-Richtung durch die obere Versteifungsplatte **26** und die u-förmige Brücke eine Bohrung vorgesehen, durch welche die Verriegelung **22** hindurchgeführt und mit dem konischen Führungsstück **18** der Verspannvorrichtung **3** verschraubt wird. Diese Arretierung erfolgt lediglich zur Halterung der Verspannvorrichtung **3** während der Montage bzw. Demontage. Demzufolge ist die Bohrung in der Brücke **5** und der oberen Versteifungsplatte **26** entsprechend groß dimensioniert, vorzugsweise als Langloch **28** ausgebildet, damit es während der Montage beim Verspannen der beiden Messblöcke **1** nicht zu einem Abscheren des Gewindezapfens **23** kommt.

Die von der Verspannvorrichtung **3** ausgehende Kraft wird über das mittig am Schenkel **15** angeordnete Aufnahmeelement **16** und die Einstecköffnung **32,** auf den Schenkel **15,** die beiden äußeren Schenkel **6** und die beiden Flansche **7** und somit auf die Auflagefüße **8** und die Auflageadapter **9** an die jeweilige Schiene **4** übertragen. Erwähnt wurde bereits die klauenförmige Gestalt des Auflagefußes **8,** in dessen Freiraum zwischen der inneren Wange **38** und der äußeren Wange **39** ein Endstück der Wägebrücke **2** lagert und oberhalb des Endstückes ein kraftumleitendes Verschlussstück **34** eingelegt ist. Dieses Verschlussstück **34** leitet gleichermaßen die Kraft weiter, wie die unter dem Endstück der Wägebrücke **2** konstruktive Ausgestaltung des Auflagefußes **8,** so dass eine gleichmäßige Kraftübertragung oberhalb und unterhalb um das Endstück der Wägebrücke **2** erfolgt. Es ist damit ein Verklemmen oder eine sonstige negative Beeinflussung eines stabförmigen bzw. balkenförmigen Lastenaufnehmers als Wäge- bzw. Messzelle vollständig ausgeschlossen. Die obere und untere Versteifungsplatte **26; 27** zur Abdeckung der u-förmigen Brücke **5** übernehmen eine zusätzliche gleichmäßige Übertragung der Verspannkräfte.

### Beispiel 2:

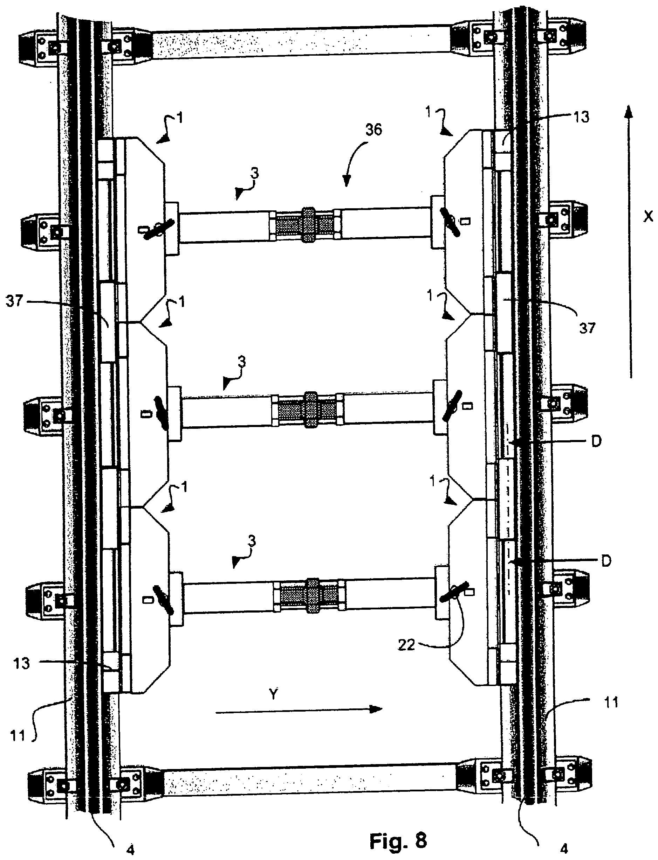

Um den Mess- bzw. Wägeprozess von Schienenfahrzeugen mit mehreren unmittelbar nebeneinander liegenden Achsen zu beschleunigen, wird gemäß der Erfindung eine Mehrfachmesseinrichtung **36** vorgeschlagen. In diesem Beispiel wird an Hand einer Mehrfachmesseinrichtung **36** die Messung von Radaufstandkräften für ein dreiachsiges Drehgestell erläutert. In Fig. 8 ist eine Draufsicht auf eine Mehrfachmesseinrichtung **36** im montierten Zustand im Gleisbett dargestellt. Die Mehrfachmesseinrichtung **36** besteht aus drei Messeinrichtungen, wie sie im Beispiel 1 näher beschrieben sind. Die Auswertung der Messergebnisse erfolgt durch Addition der Radlasten einer Achse und wiederum Addition von drei Achsen zum Gewicht des Drehgestells.

Um ein Überfahren über die drei einzelnen Messeinrichtungen zu gewährleisten, sind zwischen den einzelnen Messeinrichtungen Verbindungsbrücken **37** aufgelegt. Diese Verbindungsbrücken **37** liegen wiederum auf jeweils zwei Verschlussstücken **34** auf, wobei die Verschlussstücke **34,** wie im Beispiel 1 beschrieben, auf den Endstücken einer Wägebrücke **2** aufliegen.

In der Fig. 9 ist ein Schnitt D - D nach Fig. 8 dargestellt. Die Fig. 9 zeigt, wie die Auflagefüße **8** und somit die Wägebrücken **2** von zwei benachbarten Messeinrichtungen nach Beispiel 1 unmittelbar aneinander stoßen. Es liegt im Bereich der Erfindung, zwischen zwei benachbarten Messeinrichtungen einen Abstand zu lassen, um unterschiedlichen Achsabständen verschiedenster Drehgestelle zu entsprechen. Aus der Beabstandung von zwei benachbarten Messeinrichtungen ergibt sich eine Verlängerung der zwischenliegenden Verbindungsbrücke **37.**

Die Montage und Demontage der kompletten Mehrfachmesseinrichtung **36** erfolgt, wie im Beispiel 1 beschrieben, für jede Messeinrichtung einzeln, wobei lediglich an Stelle von Rampenplatten **13** zwischen benachbarte Mehrfachmesseinrichtungen **36** die erwähnten Verbindungsbrücken **37** eingelegt werden. Es versteht sich dabei von selbst, dass an der ersten bzw. letzten Messeinrichtung zum Auf- bzw. Abfahren Rampenplatten **13** auf den jeweiligen Verschlussstücken **34** angeordnet sind.

Durch die Gesamtkonstruktion der Messblöcke **1,** insbesondere durch die kraftumleitenden Elemente und die am Schienensteg **10** und Schienenfuß **11** anliegenden Auflageadaptern **9** sowie der Kupplungskonstruktion mit Aufnahmeelement **16** am Messblock **1** und Kugelzone **21** mit Führungsstück **18** an der einarmige Verspannvorrichtung **3,** wird ein internes Verkanten der Gesamtkonstruktion im Montage- und Demontageprozess und vor allem während des Messvorganges ausgeschlossen. Durch die bombierte Ausführung der Kugelzone **21** an den beiden Endstücken der einarmigen Verspannvorrichtung **3** kann eine optimale Anpassung an die aktuelle Einbausituation gewährleistet werden, so dass Kipp- und Anhebeerscheinungen der gesamten Messeinrichtung unter Last ausgeschlossen sind.

Die beschriebene Erfindung kann unabhängig von den hier näher ausgeführten Beispielen mit alternativen Abwandlungen auch verwendet werden zur Gewichtsmessung bei anderen Fahrzeugen. So ist es denkbar, die Messvorrichtung in eine definierte Spur einzubringen und zu verspannen und an Stelle der lasttragenden Auffahrflächen **12** muldenförmige, den Fahrzeugrädern entsprechend angepasste Elemente, aufzulegen.

### Bezugszeichenliste

- 1: Messblock, Lastaufnahmeblock
- 2: Wägebrücke = Messabschnitt
- 3: Verspannvorrichtung, einarmig, Elemente zum Verspannen
- 4: Schiene
- 5: Brücke u-förmig, kraftumleitendes Element
- 6: zwei abgewinkelte äußere Schenkel
- 7: Flansch
- 8: Auflagefüße = Stützmittel
- 9: Auflageadapter
- 10: Schienensteg
- 11: Schienenfuß
- 12: Auffahrfläche
- 13: Rampenplatte
- 14: Versteifungen
- 15: in x-Richtung verlaufender Schenkel
- 16: Aufnahmeelement am Schenkel
- 17: konische Vertiefung
- 18: konisches Führungsstück
- 19: Verspannhülsen
- 20: Schraubverspannung
- 21: Kugelzone
- 22: Verriegelung
- 23: Gewindezapfen
- 24: Führungszapfen
- 25: Nullringe
- 26: Versteifungsplatte
- 27: untere Versteifungsplatte
- 28: Langloch
- 29: rechteckige Öffnungen
- 30: Aufbordung
- 31: Spurkranz
- 32: Einstecköffnung
- 33: Kabelschutz
- 34: kraftumleitendes Verschlussstück
- 35: Biegelager
- 36: Mehrfachmesseinrichtung
- 37: Verbindungsbrücken
- 38: innere Wange eines Auflagefußes
- 39: äußere Wange des Auflagefußes

## Patentansprüche

1. Messeinrichtung zum Erfassen von Radlasten von Schienenfahrzeugen bestehend aus einem Lastaufnahmeblock (1), mit einem in diesem angeordneten Messabschnitt (2), wobei in dem Lastaufnahmeblock (1) mindestens zwei kraftumleitende Elemente (5, 34) und mindestens zwei Stützmittel (8) angeordnet sind, auf denen jeweils Endstücke von einem stabförmigen Messabschnitt (2) lagern, wobei die Stützmittel (8) streifen- und/oder punktförmige Auflagen (9) zur Arretierung in einer Gleisanlage aufweisen, **dadurch gekennzeichnet,**
**dass** die mindestens zwei Stützmittel (8) von klauenförmiger Gestalt sind und dass
als ein kraftumleitendes Element (5) eine u-förmige Brücke (5) angeordnet ist,
die in x-Richtung, also horizontal längs zu einer Schiene, seitlich parallel zu dem Messabschnitt (2) verläuft, wobei
die Brücke (5) die Stützmittel (8) verbindet,
und **dass**
als weitere kraftumleitende Elemente (34) in dem als Auflagefuß ausgebildeten Stützmittel (8) oberhalb der Endstücke des stabförmigen Messabschnitts (2) Verschlussstücke (34) liegen.

2. Messeinrichtung zum Erfassen von Radlasten von Schienenfahrzeugen mit mindestens zwei Lastaufnahmeblöcken (1) nach Patentanspruch 1, mit Elementen (3) zum Halten und Verspannen der Lastaufnahmeblöcke (1) in einer Gleisanlage, **dadurch gekennzeichnet,**
**dass** die Elemente (3) zum Verspannen aus einer zwischen zwei Lastaufnahmeblöcken (1) angeordneten einarmigen Verspannvorrichtung (3) bestehen.

3. Messeinrichtung nach Anspruch 2, **dadurch gekennzeichnet, dass** zwei Lastaufnahmeblöcke jeweils als separate Messblöcke (1) ausgebildet sind.

4. Messeinrichtung nach einem der Ansprüche 1 bis 3, **dadurch gekennzeichnet, dass** die Brücke (5) aus einem in x-Richtung verlaufenden Schenkel (15), aus zwei abgewinkelten äußeren Schenkeln (6) mit je einem abgewinkelten Flansch (7) besteht, wobei die Flansche (7) mit den Stützmitteln (8) kraftübertragend verbunden sind.

5. Messeinrichtung nach einem der Ansprüche 1 bis 3, **dadurch gekennzeichnet, dass** als weiteres kraftumleitendes Element die Brücke (5) oberhalb und unterhalb mit einer oberen Versteifungsplatte (26) und mit einer unteren Versteifungsplatte (27) versehen ist.

6. Messeinrichtung nach einem der vorangegangenen Ansprüche, **dadurch gekennzeichnet, dass** die Stützmittel (8) im Lastaufnahmeblock (1) als Auflagefüße ausgebildet sind, wobei eine innere Wange (38) des Auflagefußes (8) mit dem Flansch (7) kraftschlüssig verbunden ist, eine äußere Wange (39) des Auflagefußes (8) im montierten Zustand über Auflageadapter (9) an der Schiene (4) anliegt und im Freiraum zwischen den Wangen (38; 39) jeweils ein Endstück der Wägebrücke (2) lagert.

7. Messeinrichtung nach Anspruch 6, **dadurch gekennzeichnet, dass** an der äußeren Wange (39) des Auflagefußes (8) ein an dem Schienensteg (10) anliegender und unterhalb des Auflagefußes (8) ein an dem Schienenfuß (11) aufliegender Auflageadapter (9) angeordnet ist und die Auflageadapter (9) von streifen- und/oder punktförmiger Gestalt sind.

8. Messeinrichtung nach einem der Ansprüche 6 oder 7, **dadurch gekennzeichnet, dass** das Verschlussstück (34) über dem im Freiraum zwischen den Wangen (38; 39) aufliegenden Endstück der Wägebrücke (2) angeordnet ist.

9. Messeinrichtung nach einem der Ansprüche 6 bis 8, **dadurch gekennzeichnet, dass** zwischen der inneren Wange (38) und der äußeren Wange (39) des Auflagefußes (8) das Endstück der Wägebrücke (2) in schwimmender Ausführung angeordnet ist.

10. Messeinrichtung nach einem der vorangegangenen Ansprüche **dadurch gekennzeichnet, dass** auf der in der Auflagefüßen (8) lagernden Wägebrücke (2) eine Auffahrfläche (12) aufliegt, die in Längsrichtung der Auffahrfläche (12) auf der der Schiene (4) abgewandten Seite eine Aufbordung (30) aufweist.

11. Messeinrichtung nach Anspruch 10, **dadurch gekennzeichnet, dass** die Auffahrfläche (12) in Fahrtrichtung vorn und hinten angefast ist.

12. Messeinrichtung nach einem der vorangegangenen Ansprüche, **dadurch gekennzeichnet, dass** auf dem Verschlussstück (34) eine mit Auf- bzw. Abfahrtschräge versehene, außerhalb des Messbereiches liegende Rampenplatte (13) angeordnet ist.

13. Messeinrichtung nach einem der vorangegangenen Ansprüche, **dadurch gekennzeichnet, dass** auf oder unter der Auffahrfläche (12) und der Rampenplatte (13) Distanzplatten angeordnet sind.

14. Messeinrichtung nach einem der vorangegangenen Ansprüche, **dadurch gekennzeichnet, dass** die Endstücke der Wägebrücke (2) um Führungszapfen (24) mit Nullringen (25) bewegbar angeordnet sind und im Bereich (a - a) in den Auflagefüßen (8) schwimmend lagern.

15. Messeinrichtung nach einem oder mehreren der vorangegangenen Ansprüche, **dadurch gekennzeichnet, dass** auf dem Schenkel (15) der Brücke (5) mittig ein Aufnahmeelement (16) mit einer kugelzonenförmigen Einstecköffnung (32) angeordnet ist und sich an diese eine Vertiefung (17) in der Brücke (5) anschließt.

16. Messeinrichtung nach Anspruch 15, **dadurch gekennzeichnet, dass** senkrecht durch die Brücke (5) zur Vertiefung (17) hin eine Durchbohrung in Form eines Langloches (28) vorhanden ist.

17. Messeinrichtung nach Anspruch 1, **dadurch gekennzeichnet, dass** die einarmige Verspannvorrichtung (3) aus mindestens zwei Verspannhülsen (19) und einer Schraubverspannung (20) besteht.

18. Messeinrichtung nach Anspruch 17, **dadurch gekennzeichnet, dass** das Ende der Verspannhülse (19) in Form einer Kugelzone (21) verjüngt ist und in ein konisches Führungsstück (18) übergeht.

19. Messeinrichtung nach Anspruch 18, **dadurch gekennzeichnet, dass** das konische Führungsstück (18) eine Bohrung aufweist.

20. Mehrfachmesseinrichtung zum Erfassen von Radlasten von Schienenfahrzeugen mit mindestens zwei Messeinrichtungen mit jeweils mindestens zwei Lastaufnahmeblöcken (1) nach einem der Ansprüche 1 bis 19, mit darin angeordneten Messabschnitten und mit Elementen (3) zum Halten und Verspannen der Lastaufnahmeblöcke (1) in einer Gleisanlage, **dadurch gekennzeichnet, dass** mindestens zwei hintereinander in einem Gleisbett angeordnete Messeinrichtungen durch Verbindungsbrücken (37) zu einer Mehrfachmesseinrichtung (36) mit zentraler Messwertanzeige verbunden sind.

21. Messeinrichtung nach einem der vorangegangenen Ansprüche 1 bis 20, **dadurch gekennzeichnet, dass** die Messeinrichtung auch mit abgenommener bzw. demontierter Auffahrfläche (12) und Rampenplatten (13) und bei Verwendung als Mehrfachmesseinrichtung (36) auch mit abgenommener bzw. demontierter Verbindungsbrücke (37) zwischen einem Schienenstrang platzierbar ist, um ein Überfahren von Schienenfahrzeugen ohne Messvorgang zu ermöglichen.

22. Verfahren zum Erfassen von Radlasten von Schienenfahrzeugen unter Verwendung von mindestens zwei Lastaufnahmeblöcken, von Elementen zum Halten und Verspannen der Lastaufnahmeblöcke in einer Gleisanlage, unter Verwendung von Stützmitteln und zwischen den Stützmitteln angeordneten Messabschnitten, wobei die Messung von Radlasten nach folgenden Verfahrensschritten erfolgt:
- Verbinden mindestens zweier Lastaufnahmeblöcke mittels Elementen zum Halten und Verspannen, wobei die Lastaufnahmeblöcke je eine an ihren Endstücken gelagerte Wägebrücke (2) in Stützmitteln (8) aufnehmen,
- Einsetzen und Verspannen mindestens zweier miteinander verbundener Lastaufnahmeblöcke (1) in einer Gleisanlage, **dadurch gekennzeichnet, dass** die beim Verspannen auftretende Kraft von einer einarmigen Verspannvorrichtung (3) auf deren Kugelzone (21) in eine kugelzonenförmige Einstecköffnung (32) auf eine u-förmige Brücke (5) mit Schenkeln (15), äußeren Schenkeln (6) und Flanschen (7) auf Stützmittel und auf Schienen (4) übertragen wird, wobei die Brücke (5) die Stützmittel (8) verbindet;
- Aufsetzen von Verschlussstücken (34) als kraftumleitende Elemente in dem als Auflagefuß ausgebildeten Stützmittel (8) oberhalb der Endstücke des stabförmigen Messabschnitts (2);
- Aufsetzen von Lasttragelementen und/oder Auf- und Abfahrtschrägen auf die Verschlussstücke (34) oder die Stützmittel (8) und Messabschnitte, wobei die Lasttragelemente und/oder Auf- und Abfahrtschrägen aus Rampenplatten (13) und/oder Auffahrflächen (12) und/oder Verbindungsbrücken (37) bestehen,
- Auffahren eines Fahrzeuges über die Rampenplatten (13) auf die Auffahrfläche (12),
- Messen der Radlast mittels stabförmiger Wägebrücke (2), wobei diese eine Brücke bildend frei hängend angeordnet und an ihren Endstücken in einem definierten Bereich a - a von einem Führungszapfen (24) arretiert, schwimmend gelagert wird, wobei die Wägebrücke (2) sich während des Wäge- bzw. Messvorganges über ein Biegelager (35) in z-Richtung nach unten verbiegt und die Messgrößen oder der Verformungsweg über Dehnungsmessstreifen, Drucksensoren, Distanzsensoren, optische Sensoren und/oder andere Messmittel erfasst und ausgewertet werden.

23. Verfahren nach Anspruch 22, wobei mehrere Messeinrichtungen hintereinander gekoppelt in einem Gleisbett zu einer Mehrfachmesseinrichtung (36) angeordnet sind und zwischen den einzelnen Messeinrichtungen Verbindungsbrücken (37) aufgelegt werden.

## Claims

1. A measuring device for detecting wheel loads of rail vehicles consisting of a load-receiving block (1), having a measuring section (2) disposed therein, wherein at least two force-deflecting elements (5, 34) and at least two support means (8) are disposed in the load-receiving block (1), on which respectively terminal pieces of a rod-shaped measuring section (2) are supported, wherein the support means (8) have strip-shaped and/or dot-shaped supports (9) for locking in a track system, **characterized in that** the at least two support means (8) are of a claw-shaped design and that a U-shaped bridge (5) is disposed as a force-deflecting element (5), said U-shaped bridge extending in an x-direction, i.e. horizontally longitudinally to a rail, laterally parallel to the measuring section (2), wherein the bridge (5) connects the support means (8), and closing pieces (34) are located in the support mean (8) which is configured as a support base above the terminal pieces of the rod-shaped measuring section (2) as further force-deflecting elements (34).

2. The measuring device for detecting wheel loads of rail vehicles having at least two load-receiving blocks (1) according to Claim 1, having elements (3) for holding and bracing the load-receiving blocks (1) in a track system, **characterized in that** the elements (3) for bracing consist of a single-arm bracing device (3) disposed between two load-receiving blocks (1).

3. The measuring device according to Claim 2, **characterized in that** two load-receiving blocks are respectively configured as separate measuring blocks (1).

4. The measuring device according to any one of Claims 1 to 3, **characterized in that** the bridge (5) consists of a leg (15) extending in the x-direction, two bent outer legs (6) each having a bent flange (7), wherein the flanges (7) are connected in a force-transmitting manner to the support means (8).

5. The measuring device according to any one of Claims 1 to 3, **characterized in that** the bridge (5) is provided above and below with an upper stiffening plate (26) and with a lower stiffening plate (27) as a further force-deflecting element.

6. The measuring device according to any one of the preceding claims, **characterized in that** the support means (8) are configured as support bases in the load-receiving block (1), wherein an inner cheek (38) of the support base (8) is fastened non-positively to the flange (7), an outer cheek (39) of the support base (8) lies in contact with the rail (4) in the assembled condition by means of support adapters (9) and supports, in each case, a terminal piece of the weighbridge (2) in the free space between the cheeks (38; 39).

7. The measuring device according to Claim 6, **characterized in that** a support adapter (9) lying in contact with the rail web (10) and a support adapter (9) resting on the rail base (11) below the support base (8) are disposed on the outer cheek (39) of the support base (8), and the support adapters (9) are of a strip-shaped and/or dot-shaped design.

8. The measuring device according to any one of Claims 6 or 7, **characterized in that** the closing piece (34) is disposed above the terminal piece of the weighbridge (2) resting in the free space between the cheeks (38; 39).

9. The measuring device according to any one of Claims 6 to 8, **characterized in that** the terminal piece of the weighbridge (2) is disposed in a floating design between the inner cheek (38) and the outer cheek (39) of the support base (8).

10. The measuring device according to any one of the preceding claims, **characterized in that** a run-on surface (12) rests on the weighbridge (2) supported in the support bases (8), which run-on surface has an edge (30) in the longitudinal direction of the run-on surface (12) on the side facing away from the rail (4).

11. The measuring device according to Claim 10, **characterized in that** the run-on side (12) is chamfered at the front and back in the driving direction.

12. The measuring device according to any one of the preceding claims, **characterized in that** a ramp plate (13) provided with an ascending or respectively descending slope and located outside the measuring range is disposed on the closing piece (34).

13. The measuring device according to any one of the preceding claims, **characterized in that** spacer plates are disposed on or under the run-on surface (12) and the ramp plate (13).

14. The measuring device according to any one of the preceding claims, **characterized in that** the terminal pieces of the weighbridge (2) are disposed movably about guide journals (24) with O-rings (25) and are floatably supported in the region (a - a) in the support bases (8).

15. The measuring device according to one or more of the preceding claims, **characterized in that** a receiving element (16) having a spherical zone-shaped insertion opening (32) is disposed centrally on the leg (15) of the bridge (5) and a cavity (17) in the bridge (5) is joined to said insertion opening.

16. The measuring device according to Claim 15, **characterized in that** a through-bore in the form of an elongate hole (28) is provided vertically through the bridge (5) towards the cavity (17).

17. The measuring device according to Claim 1, **characterized in that** the single-arm bracing device (3) consists of at least two bracing sleeves (19) and a screw bracing (20).

18. The measuring device according to Claim 17, **characterized in that** the end of the bracing sleeve (19) is tapered in the form of a spherical zone (21) and turns into a conical guide piece (18).

19. The measuring device according to Claim 18, **characterized in that** the conical guide piece (18) has a bore.

20. A multiple measuring device for detecting wheel loads of rail vehicles having at least two measuring devices respectively having at least two load-receiving blocks (1) according to any one of Claims 1 to 19, having measuring sections disposed therein and having elements (3) for holding and bracing the load-receiving blocks (1) in a track system,
**characterized in that** at least two measuring devices disposed behind one another in a track bed are connected by connecting bridges (37) to form a multiple measuring device (36) having a central measurement display.

21. The measuring device according to any one of the preceding claims 1 to 20, **characterized in that** the measuring device can be placed, including with the run-on surface (12) and ramp plates (13) removed or respectively dismounted and, during use as a multiple measuring device (36), including with the connecting bridge (37) removed or respectively dismounted, between a section of track, in order to make possible a passage of rail vehicles without a measuring procedure.

22. A method for detecting wheel loads of rail vehicles using at least two load-receiving blocks, elements for holding and bracing the load-receiving blocks in a track system, using support means and measuring sections disposed between the support means, wherein the measurement of wheel loads is carried out in accordance with the following method steps:
- connecting of at least two load-receiving blocks by means of elements for holding and bracing, wherein the load-receiving blocks each receive a weighbridge (2) supported at its terminal pieces in support means (8),
- inserting and bracing of at least two load-receiving blocks (1) connected to one another in a track system, **characterized in that** the force occurring during bracing from a single-arm bracing device (3) on the spherical zone (21) thereof into a spherical zone-shaped insertion opening (32) to a U-shaped bridge (5) having legs (15), outer legs (6) and flanges (7) is transferred to support means and to rails (4),
wherein the bridge (5) connects the support means (8);
- mounting of closing pieces (34) as force-deflecting elements in the support means (8) configured as a support base above the terminal pieces of the rod-shaped measuring section (2);
- mounting of load supporting elements and/or ascending and descending slopes onto the closing pieces (34) or the support means (8) and measuring sections, wherein the load supporting elements and/or ascending and descending slopes consist of ramp plates (13) and/or run-on surfaces (12) and/or connecting bridges (37),
- running of a vehicle via the ramp plates (13) onto the run-on surface (12),
- measuring of the wheel load by means of a rod-shaped weighbridge (2), wherein the latter is disposed freely suspended to form a bridge and is floatingly supported at its terminal pieces, locked in a specified range a - a by a guide journal (24), wherein the weighbridge (2) is bent downwards during the weighing or respectively measuring procedure by means of a bending bearing (35) in the z-direction and the measuring variables or the deformation trajectory is/are detected and evaluated by means of strain gages, pressure sensors, distance sensors, optical sensors and/or other measuring means.

23. The method according to Claim 22, wherein multiple measuring devices are disposed coupled behind one another in a track bed to form a multiple measuring device (36) and connecting bridges (37) are placed between the individual measuring devices.

## Revendications

1. Dispositif de mesure pour la détection de charges de roues de véhicules ferroviaires se composant d'un bloc de réception de charge (1), avec une section de mesure (2) disposée dans celui-ci, au moins deux éléments de redistribution de force (5, 34) et au moins deux moyens d'appui (8) étant disposés dans le bloc de réception de charge (1), sur lesquels des pièces d'extrémité d'une section de mesure (2) en forme de barre sont respectivement montées, les moyens d'appui (8) présentant des supports (9) en forme de bandes et/ou de points pour le blocage sur des rails, **caractérisé en ce que** les au moins deux moyens d'appui (8) sont en forme de griffes et **en ce qu'**un pont en U (5) est disposé comme élément de redistribution de forces (5), lequel est orienté latéralement de façon parallèle à la section de mesure (2) dans la direction x, c'est-à-dire horizontalement le long d'un rail, le pont (5) reliant les moyens d'appui (8),
et **en ce que** des pièces de fermeture (34) reposent dans le moyen d'appui (8) formé comme pied support au-dessus des pièces d'extrémité de la section de mesure (2) en forme de barre, comme éléments de redistribution de forces (34) supplémentaires.

2. Dispositif de mesure pour la détection de charges de roues de véhicules ferroviaires avec au moins deux blocs de réception de charge (1) selon la revendication 1, avec des éléments (3) pour maintenir et serrer les blocs de réception de charge (1) sur des rails, **caractérisé en ce que** les éléments (3) pour le serrage se composent d'un dispositif de serrage (3) à un bras disposé entre deux blocs de réception de charge (1).

3. Dispositif de mesure selon la revendication 2, **caractérisé en ce que** deux blocs de réception de charge sont formés respectivement comme des blocs de mesure (1) séparés.

4. Dispositif de mesure selon l'une des revendications 1 à 3, **caractérisé en ce que** le pont (5) se compose d'une branche (15) orientée dans l'axe des x, de deux branches extérieures (6) en angle avec chacune une bride (7) en angle, les brides (7) étant reliées avec les moyens d'appui (8) de façon à transmettre les forces.

5. Dispositif selon l'une des revendications 1 à 3, **caractérisé en ce que** le pont (5) est muni au-dessus et au-dessous, comme élément de redistribution de forces supplémentaire, d'une plaque de renforcement supérieure (26) et d'une plaque de renforcement inférieure (27).

6. Dispositif de mesure selon l'une quelconque des revendications précédentes, **caractérisé en ce que** les moyens d'appui (8) sont formés comme pieds supports dans le bloc de réception de charge (1), une joue intérieure (38) du pied support (8) étant reliée par liaison de force avec la bride (7), une joue extérieure (39) du pied support (8) étant placée contre le rail (4) en état monté par des adaptateurs supports (9) et une pièce d'extrémité du pont de pesage (2) étant respectivement montée dans l'espace libre entre les joues (38 ; 39).

7. Dispositif de mesure selon la revendication 6, **caractérisé en ce que**, sur la joue extérieure (39) du pied support (8), un adaptateur support (9) adjacent à l'âme du rail (10) et, sous le pied support (8), un adaptateur support (9) reposant sur le patin du rail (11) sont disposés, et **en ce que** les adaptateurs supports (9) sont en forme de bandes et/ou de points.

8. Dispositif de mesure selon l'une des revendications 6 ou 7, **caractérisé en ce que** la pièce de fermeture (34) est disposée au-dessus de la pièce d'extrémité du pont de pesage (2) reposant dans l'espace libre entre les joues (38 ; 39).

9. Dispositif de mesure selon l'une des revendications 6 à 8, **caractérisé en ce que** la pièce d'extrémité du pont de pesage (2) est disposée en réalisation flottante entre la joue intérieure (38) et la joue extérieure (39) du pied support (8).

10. Dispositif de mesure selon l'une quelconque des revendications précédentes, **caractérisé en ce qu'**une surface de chargement (12) repose sur le pont de pesage (2) monté dans les pieds supports (8), laquelle présente un rebord (30) sur le côté éloigné du rail (4) dans le sens longitudinal de la surface de chargement (12).

11. Dispositif de mesure selon la revendication 10, **caractérisé en ce que** la surface de chargement (12) est biseautée devant et derrière, dans le sens de déplacement.

12. Dispositif de mesure selon l'une quelconque des revendications précédentes, **caractérisé en ce qu'**une plaque de rampe (13) munie d'une pente de montée ou de descente, reposant hors de la plage de mesure, est disposée sur la pièce de fermeture (34).

13. Dispositif de mesure selon l'une quelconque des revendications précédentes, **caractérisé en ce que** des plaques de distance sont disposées sur ou sous la surface de chargement (12) et la plaque de rampe (13).

14. Dispositif de mesure selon l'une quelconque des revendications précédentes, **caractérisé en ce que** les pièces d'extrémité du pont de pesage (2) sont disposées de façon mobile sur des goujons de guidage (24) avec joints toriques (25) et sont montées de façon flottante dans les pieds supports (8) dans la zone (a - a).

15. Dispositif de mesure selon l'une ou plusieurs des revendications précédentes, **caractérisé en ce qu'**un élément de réception (16) avec une ouverture d'insertion (32) en forme de zone sphérique est disposé sur la branche (15) du pont (5), au milieu, et **en ce qu'**une cavité (17) dans le pont (5) est adjacente à cette ouverture.

16. Dispositif de mesure selon la revendication 15, **caractérisé en ce qu'**un perçage vertical à travers le pont (5) jusqu'à la cavité (17) est donné sous la forme d'un trou oblong (28).

17. Dispositif de mesure selon la revendication 1, **caractérisé en ce que** le dispositif de serrage à bras unique (3) se compose d'au moins deux douilles de serrage (19) et d'un élément de serrage par vissage (20).

18. Dispositif de mesure selon la revendication 17, **caractérisé en ce que** l'extrémité de la douille de serrage (19) est rétrécie en forme d'une zone sphérique (21) et est adjacente à un élément de guidage (18) conique.

19. Dispositif de mesure selon la revendication 18, **caractérisé en ce que** l'élément de guidage conique (18) présente un alésage.

20. Dispositif de mesure multiple pour la détection de charges de roues de véhicules ferroviaires avec au moins deux dispositifs de mesure avec respectivement au moins deux blocs de réception de charge (1) selon l'une des revendications 1 à 19, avec des sections de mesure y étant disposées et avec des éléments (3) pour maintenir et serrer les blocs de réception de charge (1) sur des rails, **caractérisé en ce qu'**au moins deux dispositifs de mesure disposés l'un derrière l'autre sur un ballast sont reliés par des ponts de liaison (37) en un dispositif de mesure multiple (36) avec affichage de valeur de mesure centrale.

21. Dispositif de mesure selon l'une des revendications précédentes 1 à 20, **caractérisé en ce que** le dispositif de mesure, également avec surface de chargement (12) et plaques de rampes (13) ôtées ou démontées, et, lors de l'utilisation comme dispositif de mesure multiple (36), également avec pont de liaison (37) ôté ou démonté, est plaçable entre une file de rails, pour permettre un passage de véhicules ferroviaires sans processus de mesure.

22. Procédé pour la détection de charges de roues de véhicules ferroviaires par l'utilisation d'au moins deux blocs de réception de charge, d'éléments pour maintenir et serrer les blocs de réception de charge sur des voies, par l'utilisation de moyens d'appui et de sections de mesure disposées entre les moyens d'appui, la mesure de charges de roues étant effectuée par les étapes de procédé suivantes :
- relier au moins deux blocs de réception de charge au moyen des éléments pour le maintien et le serrage, les blocs de réception de charge accueillant dans des moyens d'appui (8) chacun un pont de pesage (2) monté sur leurs pièces d'extrémité,
- placer et serrer sur des rails au moins deux blocs de réception de charge (1) reliés entre eux, **caractérisé en ce que**,
les forces se produisant lors du serrage sont transmises, d'un dispositif de serrage (3) sur sa zone sphérique (21) dans une ouverture d'insertion (32) en forme de zone sphérique sur un pont en U (5) avec bras (15), bras extérieurs (6) et brides (7), sur des moyens d'appui et sur des rails (4),
le pont (5) reliant les moyens d'appui (8) ;
- pose de pièces de fermeture (34) comme éléments redistribuant les forces dans le moyen d'appui (8) formé comme pied support au-dessus des pièces d'extrémité de la section de mesure en forme de barre (2) ;
- pose d'éléments de support de charge et/ou de pentes de montée et de descente sur les pièces de fermeture (34) ou les moyens d'appui (8) et les sections de mesure, les éléments de support de charge et/ou les pentes de montée et de descente se composant de plaques de rampes (13) et/ou de surfaces de chargement (12) et/ou de ponts de liaison (37),
- chargement d'un véhicule sur les plaques de rampes (13) sur la surface de chargement (12),
- mesure de la charge de roue au moyen du pont de pesage (2) en forme de barre, celui-ci, formant un pont, disposé par suspension libre et bloqué par un goujon de guidage (24) à ses pièces d'extrémité dans une zone définie a - a, étant monté de façon flottante, le pont de pesage (2) se déformant vers le bas pendant le procédé de pesage ou de mesure par un support fléchissant (35) en direction z et les grandeurs de mesure ou le trajet de déformation étant saisis et analysés par des bandes de mesure d'étirement, des capteurs de pression, des capteurs de distance, des capteurs optiques et/ou d'autres moyens de mesure.

23. Procédé selon la revendication 22, plusieurs dispositifs de mesure étant disposés les uns derrière les autres couplés sur un ballast en un dispositif de mesure multiple (36) et des ponts de liaison (37) étant posés entre les différents dispositifs de mesure.
